# EUROPEAN PATENT SPECIFICATION

(11) **EP 2 148 176 B1**
(45) Date of publication and mention of the grant of the patent: **18.05.2011**
(21) Application number: 09164971.5
(22) Date of filing: 08.07.2009
(51) Int. Cl.: G01C 23/00, G08G 5/04

(54) **Aircraft display system with obstacle warning envelope**
Flugzeug-Anzeigesystem mit Hinderniswarnhüllkurve
Systèmes d'affichage d'avion avec enveloppe d'avertissement d'obstacle

(30) Priority: 23.07.2008 US 178470
(43) Date of publication of application: 27.01.2010
(73) Proprietor: Honeywell International Inc., Morristown, NJ 07962 (US)
(72) Inventor: Prashanth, G, Morristown, NJ 07962 (US)
(74) Representative: Buckley, Guy Julian

(56) References cited:
- EP-A- 1 832 850
- EP-A- 1 843 127
- EP-A- 1 857 781
- US-B1- 6 347 263

## Description

The present invention generally relates to aircraft display systems and methods and, more particularly, to aircraft systems and methods for enhanced display of obstacles.

### BACKGROUND

Computer generated aircraft displays have become highly sophisticated and capable of displaying a substantial amount of flight management, navigation, and control information that gives flight crews more effective control of the aircraft and a reduction in workload. In this regard, electronic displays, such as Heads-Up Displays (HUDs) and Heads-Down Displays (HDDs), are used in aircraft as Primary Flight Displays to display important flight management, navigation, and control information to flight crews.

Primary Flight Displays are computer-generated displays that provide flight crews with real-time visual representations of the operational states of their aircraft during flights. For example, the Primary Flight Display can combine critical flight instrumentation (e.g., altitude, attitude, heading, airspeed, vertical speed instruments) and primary engine instrument indicators into a single, readily interpretable display. As a result, Primary Flight Displays have become effective visual tools for controlling aircraft, reducing pilot workload, increasing situational awareness, and improving overall flight safety.

Flight information regarding obstacles displayed on Primary Flight Displays is useful in maintaining proper aircraft safety and control. Information about obstacles in or near the flight path is particularly important, especially to aircraft flying at low altitudes, such as during landing, take off, or low visibility conditions. Conventional display systems, including those with ground proximity warning systems, may exhibit challenges in providing an accurate perception of aircraft distance to an obstacle or, for example, the likelihood that the obstacle will pose an issue. Generally, the flight crew identifies and evaluates each obstacle to determine whether each obstacle will present an issue. This may require the flight crew to track the lateral and vertical distance from the obstacle, which may require the monitoring of flight critical data such as flight path, altitudes, and speed to ensure that the aircraft clears the obstacle.
US 6, 347, 263 discloses an aircraft terrain information system comprising an aircraft terrain warning generator provided by a terrain and obstacle warning generator having a lower boundary formed according to the lesser of a current aircraft the flight path angle and an attainable client gradient.
EP 1832850 A1 discloses systems and methods for selectively altering a ground proximity message in a flight control system.

Accordingly, it is desirable to provide systems and methods that increase the visibility of obstacles that may impact the aircraft. Furthermore, other desirable features and characteristics of the present invention will become apparent from the subsequent detailed description of the invention and the appended claims, taken in conjunction with the accompanying drawings and this background of the invention.

### BRIEF SUMMARY

The present invention in its various aspects is as set out in the appended claims. In accordance with an exemplary embodiment, a visual display system for an aircraft is provided. The system includes a database for storing obstacle information and a processor coupled to the database and configured to construct an obstacle warning envelope for the aircraft and receive obstacle information from the database based on the obstacle warning envelope. The processor is further configured to supply display commands associated with the obstacle warning envelope and the obstacle information. The system further includes a display device coupled to the processor for receiving the display commands and operable to render a three-dimensional view, including the obstacle warning envelope and the obstacle. The display device provides a warning when the obstacle is within the obstacle warning envelope.

In accordance with another exemplary embodiment, a method of displaying an obstacle on an aircraft display system is provided. The method includes constructing and displaying an obstacle warning envelope; evaluating the obstacle relative to the obstacle warning envelope; and providing a warning if the obstacle is within the obstacle warning envelope.

In accordance with yet another exemplary embodiment, a visual display system for an aircraft includes a database for storing obstacle information and a processor coupled to the database and configured to construct an obstacle warning envelope for the aircraft based on aircraft specific parameters, including a flight path of the aircraft, and receive obstacle information from the database based on the obstacle warning envelope. The processor is further configured to supply display commands associated with the obstacle warning envelope and the obstacle information, and to evaluate the obstacle within the obstacle warning envelope and determine a warning level of the warning. A display device is coupled to the processor for receiving the display commands and operable to render a three-dimensional view, including the obstacle warning envelope and the obstacle. The display device provides a warning when the obstacle is within the obstacle warning envelope. The display device is configured to display a first warning at a first warning level when the obstacle is at a first distance from the aircraft and a second warning at a second warning level when the obstacle is at a second distance from the aircraft.

### BRIEF DESCRIPTION OF THE DRAWINGS

The present invention will hereinafter be described in conjunction with the following drawing figures, wherein like numerals denote like elements, and wherein:

FIG. 1 is a functional block diagram of an aircraft display system according to an exemplary embodiment;

FIG. 2 depicts an exemplary image that may be rendered by the aircraft display system of FIG. 1;

FIG. 3 depicts another exemplary image that may be rendered by the aircraft display system of FIG. 1; and

FIG. 4 depicts yet another exemplary image that may be rendered by the aircraft display system of FIG. 1.

### DETAILED DESCRIPTION

The following detailed description is merely exemplary in nature and is not intended to limit the invention or the application and uses of the invention. Furthermore, there is no intention to be bound by any theory presented in the preceding background or the following detailed description.

Broadly, exemplary embodiments described herein provide visual display systems and methods for aircraft. More specifically, the visual display systems and methods display images that each include an obstacle warning envelope that provides warnings for obstacles that may impact the aircraft.

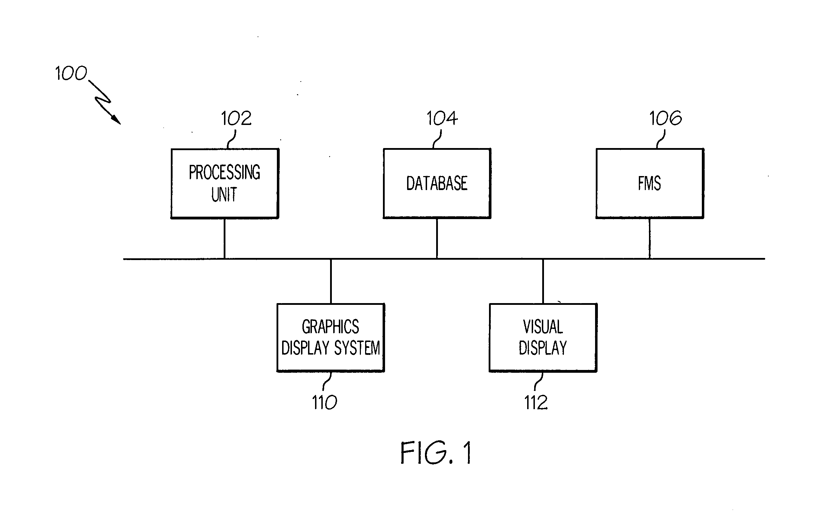

FIG. 1 depicts a block diagram of an exemplary aircraft visual display system 100 for displaying an obstacle warning envelope that indicates warnings for obstacles that may impact the aircraft. The system 100 includes a processing unit 102, a database 104, a flight management system 106, a graphics display generator 110, and a visual display 112. Notably, it should be understood that although the system 100 appears in FIG. 1 to be arranged as an integrated system, the system 100 is not so limited and can also include an arrangement whereby one or more of the processing unit 102, the database 104, the flight management system 106, the graphics display generator 110, and the visual display 112 is a separate component or a subcomponent of another system located either onboard or external to an aircraft. Also, for example, the system 100 can be arranged as an integrated system (e.g., aircraft display system, Primary Flight Display system, etc.) or a subsystem of a more comprehensive aircraft system (e.g., flight management system, navigation and control system, target aiming and control system, collision alert and/or avoidance system, weather avoidance system, etc.). The system 100 can be utilized in an aircraft, such as a helicopter, airplane, or unmanned vehicle. Moreover, exemplary embodiments of the system 100 can also be utilized in spacecraft, ships, submarines, fixed wing and rotor aircraft, such as helicopters, as well as other types of vehicles. For simplicity, embodiments are described below with reference to "aircraft."

The processing unit 102 can be a computer processor associated with a primary flight display (PFD), and/or a ground proximity warning system (GPWS), including an enhanced ground proximity warning system (EGPWS), terrain awareness and warning system (TAWS), and/or traffic collision avoidance system (TCAS). Generally, the processing unit 102 receives and/or retrieves flight management information (e.g., from the flight management system 106) and landing, target and/or terrain information (e.g., from database 104); generates display control signals for a visual display of the flight management information (including, for example, a zero pitch reference line; one or more heading indicators, tapes for airspeed and altitude, etc.), target, obstacle, and/or terrain information, and a flight path marker (or similar type of aircraft aiming symbol); and sends the generated display control signals to a graphics display generator (e.g., the graphics display generator 110) associated with a visual display (e.g., the visual display 112). More specific functions of the processing unit 102 will be discussed below.

Database 104 is coupled to processing unit 102 and can be a memory device (e.g., non-volatile memory, disk, drive, tape, optical storage device, mass storage device, etc.) that can store digital landing, waypoint, and target location as either absolute coordinate data or as a function of an aircraft's position. Database 104 can also include, for example, a terrain database, which includes the locations and elevations of natural terrain. More specifically, as discussed in further detail below, database 104 includes information concerning obstacles, including terrain obstacles such as mountains or other elevated ground areas, and also the locations and elevations of man-made obstacles such as smokestacks, radio antenna towers, buildings, bridges, etc. The obstacle information can include the type of obstacle, as well as height, latitudinal and longitudinal data. Obstacles of the foregoing type are generally depicted in various aeronautical publications (including, for example, the terminal area chart (TAC), sectional aeronautical chart (SAC) and world aeronautical chart (WAC)) and may also be represented in a variety of commonly available navigational databases that may be accessed either on the aircraft or on the ground. Navigation data stored in database 104 can be received from external, up-linked sources, or an onboard device that senses and maps man-made obstacles (e.g., airports, runways, etc.). Obstacle information can also be obtained in real time with sensors, such as, for example, a Forward Looking Infrared (FLIR) sensor, or an active or passive type of radar device.

The flight management system 106 is coupled to processing unit 102, and can provide navigation data associated with the aircraft's current position and flight direction (e.g., heading, course, track, etc.) to the processing unit 102. The navigation data provided to the processing unit 102 can also include information about the aircraft's airspeed, altitude, pitch, and other important flight information. In one exemplary embodiment, the flight management system 106 can include any suitable position and direction determination devices that are capable of providing the processing unit 102 with at least an aircraft's current position (e.g., in latitudinal and longitudinal form), the real-time direction (heading, course, track, etc.) of the aircraft in its flight path, the waypoints along the flight path, other important flight information (e.g., pitch, airspeed, altitude, attitude, etc.), and particularly obstacle information. Information can be provided to the processing unit 102 by, for example, an Inertial Reference System (IRS), Air-data Heading Reference System (AHRS), and/or a global positioning system (GPS).

The system 100 also includes the graphics display generator 110 coupled to the processing unit 102 and the visual display 112. The visual display 112 may include any device or apparatus suitable for displaying various types of computer generated symbols and information representing at least pitch, heading, flight path, airspeed, altitude, landing information, waypoints, targets, obstacle, terrain, and obstacle warning envelope data in an integrated, multi-color or monochrome form. Using data retrieved (or received) from the flight management system 106, the processing unit 102 executes one or more algorithms (e.g., implemented in software) for determining the position of waypoints, obstacles, obstacle warning envelope, flight path marker, landing information, a zero pitch reference line, and heading indicators on the visual display 112. The processing unit 102 then generates a plurality of display control signals representing this data, and sends display control signals to the visual display 112 via the graphics display generator 110. In this embodiment, the visual display 112 is an aircraft cockpit, multi-color display (e.g., a Primary Flight Display). The graphics display generator 110 interprets the display control signals and generates a suitable display, which is presented on a screen or monitor of the visual display 112, as discussed in greater detail below.

Although a cockpit display screen may be used to display the above-described flight information symbols and data, any suitable type of display medium capable of visually presenting multi-colored or monochrome flight information for a pilot or other flight crew member can be provided, such as, for example, various CRT and flat-panel display systems (e.g., CRT displays, LCDs, OLED displays, plasma displays, projection displays, HDDs, HUDs, etc.).

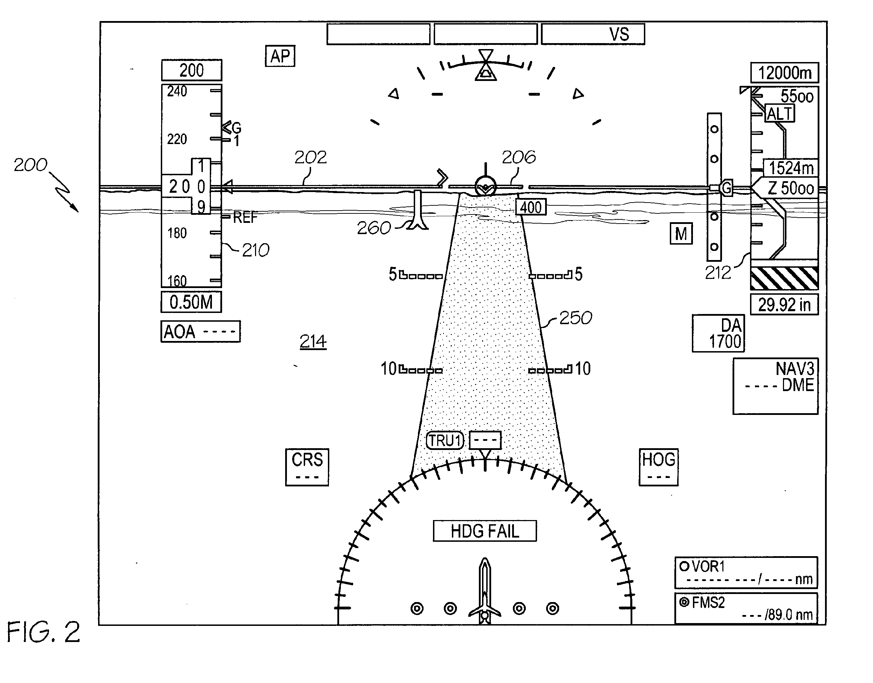

FIGS. 2-4 depict examples of an exemplary visual display 200 that may be rendered by the aircraft display system 100 of FIG. 1. The display 200 shows, among other things, computer generated symbols representing a zero pitch reference line (e.g., commonly referred to as a horizon line) 202, a flight path marker (also known as a flight path vector or velocity vector) 206, an airspeed scale or tape 210, an altitude scale or tape 212, and terrain (e.g., identified generally as element 214). In this embodiment, the terrain 214 is rendered as a three-dimensional, perspective view. The terrain 214 can include any representation of the environment surrounding the aircraft, including flattened terrain. Additionally, the terrain 214 can include a virtual plane selected by a pilot at certain elevation relative to the aircraft and is rendered at that elevation. Although the display 200 is shown as an egocentric, first-person frame of reference, the display 200 can be a secondary, wingman, and/or plan or perspective view that enables a viewer to view the aircraft, as well as zoom in and out.

In addition, and as will now be described in more detail, the display 200 may also selectively render symbology representing an obstacle warning envelope 250 that functions to warn the flight crew of any obstacles (e.g., obstacle 260). Reference is additionally made to FIG. 1 to describe the construction and function of the obstacle warning envelope 250.

The processing unit 102 constructs the obstacle warning envelope 250 with algorithms based on a number of parameters, including the present position of the aircraft, flight path, aircraft speed, wing span, altitude, pitch angle, roll angle, wind shear, ability of the aircraft to pull up, and the like. Generally, the obstacle warning envelope 250 is superimposed on the terrain 214 and provides an indication of the intended flight path of the aircraft such that problematic obstacles can be identified. The obstacle warning envelope 250 extends to a predetermined forward distance and includes a lateral margin of safety on either side of the aircraft. As one example, at greater speeds, the obstacle warning envelope 250 may extend to a greater distance than otherwise because the obstacles may affect the aircraft at shorter time intervals. Similarly, at greater aircraft weights, the obstacle warning envelope 250 may extend to a greater distance than otherwise because it takes more time for the aircraft to change position and direction. The obstacle warning envelope 250 may also extend beneath the aircraft with some safe margin of clearance.

Database 104 includes data concerning obstacles (e.g., obstacle 260) within or near the obstacle warning envelope 250, including manmade and natural structures. This data may include, for example, the position and altitude of each obstacle 260. At each aircraft movement or at predetermined intervals, the processing unit 102 will recalculate the obstacle warning envelope 250 and evaluate the obstacle 260. As discussed below, when the obstacle 260 approaches or is within the obstacle warning envelope 250, i.e., when the obstacle 260 may pose a threat to the aircraft based on the flight plan and other aircraft specific parameters, the system 100 will provide a warning to the flight crew. Typically, the warning is based both on the position of the obstacle relative to the obstacle warning envelope 250 and the aircraft itself, as well as the height of the obstacle 260, to ensure that the aircraft can fly over or around the obstacle 260.

As an example, in FIG. 2, the processing unit 102 constructs the obstacle warning envelope 250, and searches database 104 for any obstacle that may fall within the obstacle warning envelope 250. In this case, the obstacle 260 is outside of the obstacle warning envelope 250. As a result, the system 100 will not provide any warning to the flight crew. Since no warning is necessary, the obstacle warning envelope 250 can be a default color such as green. As the aircraft moves or as the flight parameters change, the system 100 will continue to evaluate the obstacle 260 to determine whether a warning is necessary.

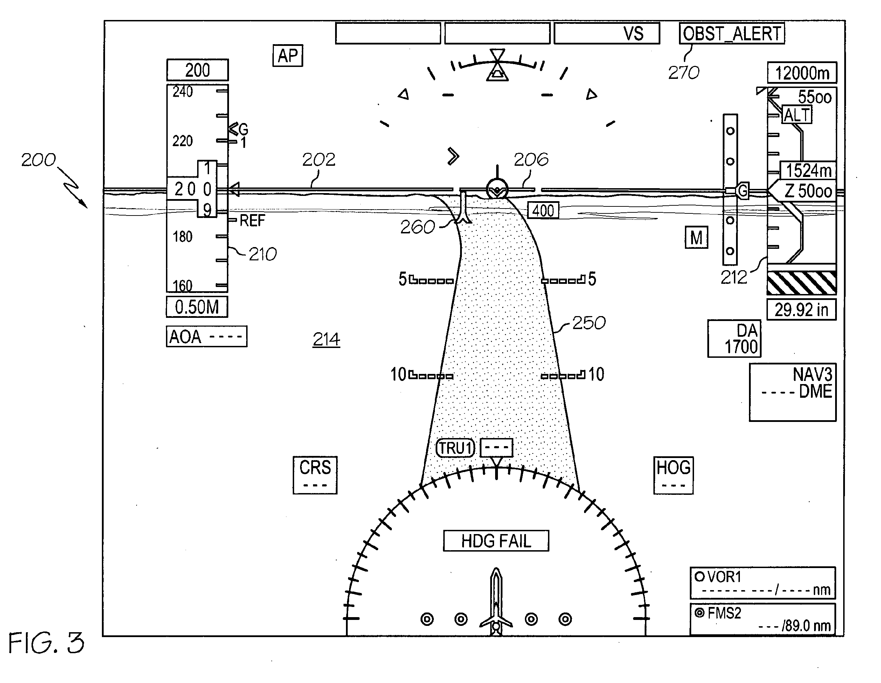

In FIG. 3, the obstacle 260 falls within the obstacle warning envelope 250. The processing unit 102 evaluates the obstacle 260 to determine the appropriate warning. In this case, the obstacle 260 is still some distance from the aircraft. As a result, the system 100 will issue an advisory warning. In this exemplary embodiment, the advisory warning can include changing the color of the obstacle warning envelope 250 and/or the obstacle 260. In one example, the obstacle warning envelope 250 turns from green to amber. Additionally or as an alternative, the advisory warning can include pulsing the obstacle warning envelope 250 and/or obstacle 260 such that they blink. A dedicated warning annunciation 270 such as "OBST_ALERT" may also be provided. FIG. 3 additionally depicts that the obstacle warning envelope 250 can generally track the intended flight path to give the flight crew a better indication of the obstacles 260 within the flight path. Conventional systems may only warn the flight crew about obstacles directly in front of the aircraft. As suggested above, the system 100 will continue to construct the obstacle warning envelope 250, adjusting as necessary, and to evaluate the obstacle 260. If the obstacle 260 moves outside of the obstacle warning envelope 250, the warning indications will be removed.

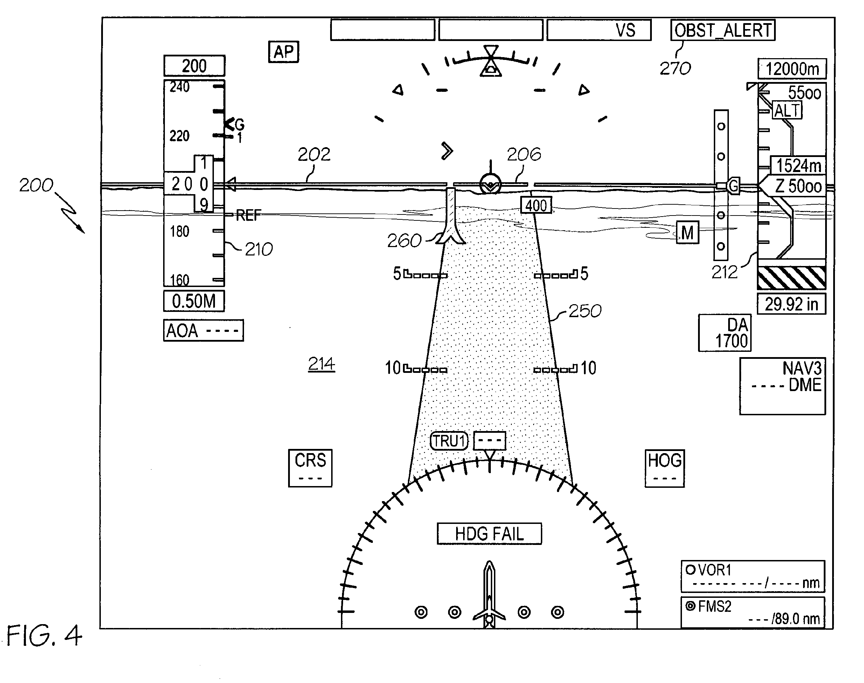

In FIG. 4, the obstacle 260 falls within the obstacle warning envelope 250 at a relatively close distance and at a height that may affect the aircraft. In this case, the system 100 will issue an alert warning that is more urgent than the advisory warning. In this exemplary embodiment, the alert warning can include changing the color of the obstacle warning envelope 250 and/or the obstacle 260 to red and causing one or both of them to blink. Additionally, an aural warning may be provided in the advisory and/or alert warnings. In a further embodiment, the system 100 can provide suggestions for avoiding the obstacle 260, such as an alternate heading and/or a more urgent "pull-up" or "turn left" signal. The system 100 can render the obstacle warning envelope 250 at all times, or only at specified times, such as when the aircraft is below a certain altitude.

Accordingly, exemplary embodiments discussed herein provide a visual display system 100 with an obstacle warning envelope 250 that alerts the flight crew to any obstacles 260 in the path of the aircraft. The system 100 automatically assesses each obstacle 260 and provides the appropriate warning. The system 100 constructs the obstacle warning envelope 250 and evaluates the obstacle 260 based on flight specific parameters such as the flight path. This can reduce the workload of the flight crew, thus enabling improved safety and flight management.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A Visual Display system (100) for an aircraft, comprising:
a database (104) for storing obstacle information;
a processor (102) coupled to the database (104) and configured to construct an obstacle warning envelope (250) for the aircraft and receive obstacle information (260) from the database (104) based on the obstacle warning envelope (250), the processor (102) further configured to receive terrain information (214), and the processor (102) further configured to supply display commands associated with the obstacle warning envelope (250), the obstacle information (260), and the terrain information (214); and
a display device (112) coupled to the processor (102) for receiving the display commands and operable to render a three-dimensional view (200) that includes a representation of the terrain information (214), the obstacle warning envelope (250) and the obstacle (260), the obstacle warning envelope (250) being superimposed on the terrain information (214) to provide an indication of the intended flight path, the obstacle warning envelope (250) extending to a predetermined forward distance and including a lateral margin of safety on either side of the aircraft, the display device (112) providing a warning when the obstacle (260) is within the obstacle warning envelope (250).

2. The Visual Display system (100) of claim 1, wherein the display device (112) is further configured to display the obstacle warning envelope (250) in a first color when the obstacle (260) is outside of the obstacle warning envelope and in a second color when the obstacle is within the obstacle warning envelope (250).

3. The Visual Display system (100) of claim 1, wherein the processor (102) is configured to evaluate the obstacle (260) within the obstacle warning envelope (250) and determine a warning level of the warning, the display device (112) configured to display a first warning at a first warning level and a second warning at a second warning level.

4. The Visual Display system (100) of claim 3, wherein the first warning is a color change and the second warning is a blinking symbol.

5. The Visual Display system (100) of claim 3, wherein the first warning includes displaying the obstacle warning envelope (250) in a first color and the second warning includes displaying the obstacle warning envelope (250) in a second color.

6. The Visual Display system (100) of claim 3, wherein the display device (112) is configured to display the first warning at a first distance of the aircraft from the obstacle (260) and the second warning at a second distance of the aircraft from the obstacle (260).

7. The Visual Display system (100) of claim 3, wherein the display device (112) is configured to display the first warning when the aircraft is at a first altitude relative to the obstacle (260) and the second warning when the aircraft is at a second altitude relative to the obstacle (260).

8. The Visual Display system (100) of claim 1, wherein the predetermined forward distance of the obstacle warning envelope (250) is based on aircraft speed.

9. A method of displaying an obstacle on a Visual Display system (100) for an aircraft as defined in claim 1, the method comprising the steps of:
constructing and displaying an obstacle warning envelope superimposed on terrain information to provide an indication of the intended flight path, the obstacle warning envelope further extending to a predetermined forward distance and including a lateral margin of safety on either side of the aircraft;
evaluating an obstacle relative to the obstacle warning envelope; and
providing a warning if the obstacle is within the obstacle warning envelope.

## Patentansprüche

1. Visuelles Anzeigesystem (100) für ein Flugzeug, umfassend:
eine Datenbank (104) zum Speichern von Hindernisinformationen;
einen mit der Datenbank (104) gekoppelten Prozessor (102), der dafür ausgelegt ist, eine Hinderniswarnenveloppe (250) für das Flugzeug zu konstruieren und Hindernisinformationen (260) aus der Datenbank (104) auf der Basis der Hinderniswarnenveloppe (250) zu empfangen, wobei der Prozessor (102) ferner dafür ausgelegt ist, Geländeinformationen (214) zu empfangen und der Prozessor (102) ferner dafür ausgelegt ist, Anzeigebefehle zu liefern, die mit der Hinderniswarnenveloppe (250), den Hindernisinformationen (260) und den Geländeinformationen (214) assoziiert sind; und
eine mit dem Prozessor (102) gekoppelte Anzeigeeinrichtung (112) zum Empfangen der Anzeigebefehle, die betreibbar ist, um eine dreidimensionale Ansicht (200) wiederzugeben, die eine Darstellung der Geländeinformationen (214), der Hinderniswarnenveloppe (250) und des Hindernisses (260) umfasst, wobei die Hinderniswarnenveloppe (250) den Geländeinformationen (214) überlagert wird, um eine Angabe des beabsichtigten Flugwegs bereitzustellen, wobei sich die Hinderniswarnenveloppe (250) bis zu einer vorbestimmten Vorwärtsdistanz erstreckt und auf jeder Seite des Flugzeugs eine laterale Sicherheitsreserve umfasst, wobei die Anzeigeeinrichtung (112) eine Warnung gibt, wenn sich das Hindernis (260) in der Hinderniswarnenveloppe (250) befindet.

2. Visuelles Anzeigesystem (100) nach Anspruch 1, wobei die Anzeigeeinrichtung (112) ferner dafür ausgelegt ist, die Hinderniswarnenveloppe (250) in einer ersten Farbe anzuzeigen, wenn sich das Hindernis (260) außerhalb der Hinderniswarnenveloppe befindet, und in einer zweiten Farbe, wenn sich das Hindernis in der Hinderniswarnenveloppe (250) befindet.

3. Visuelles Anzeigesystem (100) nach Anspruch 1, wobei der Prozessor (102) dafür ausgelegt ist, das Hindernis (260) in der Hinderniswarnenveloppe (250) zu evaluieren und ein Warnniveau der Warnung zu bestimmen, wobei die Anzeigeeinrichtung (112) dafür ausgelegt ist, auf einem ersten Warnniveau eine erste Warnung und auf einem zweiten Warnniveau eine zweite Warnung anzuzeigen.

4. Visuelles Anzeigesystem (100) nach Anspruch 3, wobei die erste Warnung ein Farbwechsel ist und die zweite Warnung ein blinkendes Symbol ist.

5. Visuelles Anzeigesystem (100) nach Anspruch 3, wobei die erste Warnung das Anzeigen der Hinderniswarnenveloppe (250) in einer ersten Farbe umfasst und die zweite Warnung das Anzeigen der Hinderniswarnenveloppe (250) in einer zweiten Farbe umfasst.

6. Visuelles Anzeigesystem (100) nach Anspruch 3, wobei die Anzeigeeinrichtung (112) dafür ausgelegt ist, die erste Warnung in einer ersten Distanz des Flugzeugs von dem Hindernis (260) und die zweite Warnung in einer zweiten Distanz des Flugzeugs von dem Hindernis (260) anzuzeigen.

7. Visuelles Anzeigesystem (100) nach Anspruch 3, wobei die Anzeigeeinrichtung (112) dafür ausgelegt ist, die erste Warnung anzuzeigen, wenn sich das Flugzeug auf einer ersten Höhe relativ zu dem Hindernis (260) befindet, und die zweite Warnung, wenn sich das Flugzeug auf einer zweiten Höhe relativ zu dem Hindernis (260) befindet.

8. Visuelles Anzeigesystem (100) nach Anspruch 1, wobei die vorbestimmte Vorwärtsdistanz der Hinderniswarnenveloppe (250) auf Flugzeuggeschwindigkeit basiert.

9. Verfahren zum Anzeigen eines Hindernisses auf einem visuellen Anzeigesystem (100) für ein Flugzeug nach Anspruch 1, wobei das Verfahren die folgenden Schritte umfasst:
Konstruieren und Anzeigen einer Geländeinformationen überlagerten Hinderniswarnenveloppe, um eine Angabe des beabsichtigten Flugwegs bereitzustellen, wobei sich die Hinderniswarnenveloppe ferner bis zu einer vorbestimmten Vorwärtsdistanz erstreckt und auf jeder Seite des Flugzeugs eine laterale Sicherheitsreserve umfasst;
Evaluieren eines Hindernisses relativ zu der Hinderniswarnenveloppe; und
Geben einer Warnung, wenn sich das Hindernis in der Hinderniswarnenveloppe befindet.

## Revendications

1. Système d'affichage visuel (100) pour un aéronef, comprenant :
une base de données (104) pour stocker des informations d'obstacle ;
un processeur (102) relié à la base de données (104) et conçu pour construire une enveloppe d'avertissement d'obstacle (250) pour l'aéronef et pour recevoir des informations d'obstacle (260) issues de la base de données (104) compte tenu de l'enveloppe d'avertissement d'obstacle (250), le processeur (102) étant en outre conçu pour recevoir des informations de terrain (214), et le processeur (102) étant en outre conçu pour fournir des commandes d'affichage associées à l'enveloppe d'avertissement d'obstacle (250), aux informations d'obstacle (260) et aux informations de terrain (214) ; et
un dispositif d'affichage (112) relié au processeur (102) pour recevoir les commandes d'affichage et fonctionnant pour restituer une vue en trois dimensions (200) comportant une représentation des informations de terrain (214), de l'enveloppe d'avertissement d'obstacle (250) et de l'obstacle (260), l'enveloppe d'avertissement d'obstacle (250) étant superposée sur les informations de terrain (214) pour fournir une indication de la trajectoire de vol projetée, l'enveloppe d'avertissement d'obstacle (250) s'étendant jusqu'à une distance en avant prédéfinie et comportant une marge de sécurité latérale de chaque côté de l'aéronef, le dispositif d'affichage (112) fournissant un avertissement si l'obstacle (260) se situe au sein de l'enveloppe d'avertissement d'obstacle (250).

2. Système d'affichage visuel (100) selon la revendication 1, le dispositif d'affichage (112) étant en outre conçu pour afficher l'enveloppe d'avertissement d'obstacle (250) dans une première couleur si l'obstacle (260) se situe en dehors de l'enveloppe d'avertissement d'obstacle et dans une deuxième couleur si l'obstacle se situe au sein de l'enveloppe d'avertissement d'obstacle (250).

3. Système d'affichage visuel (100) selon la revendication 1, le processeur (102) étant conçu pour évaluer l'obstacle (260) au sein de l'enveloppe d'avertissement d'obstacle (250) et pour établir un niveau d'avertissement relatif à l'avertissement, le dispositif d'affichage (112) étant conçu pour afficher un premier avertissement à un premier niveau d'avertissement et un deuxième avertissement à un deuxième niveau d'avertissement.

4. Système d'affichage visuel (100) selon la revendication 3, le premier avertissement étant un changement de couleur et le deuxième avertissement étant un symbole clignotant.

5. Système d'affichage visuel (100) selon la revendication 3, le premier avertissement comportant l'affichage de l'enveloppe d'avertissement d'obstacle (250) dans une première couleur et le deuxième avertissement comportant l'affichage de l'enveloppe d'avertissement d'obstacle (250) dans une deuxième couleur.

6. Système d'affichage visuel (100) selon la revendication 3, le dispositif d'affichage (112) étant conçu pour afficher le premier avertissement à une première distance de l'aéronef vis-à-vis de l'obstacle (260) et le deuxième avertissement à une deuxième distance de l'aéronef vis-à-vis de l'obstacle (260).

7. Système d'affichage visuel (100) selon la revendication 3, le dispositif d'affichage (112) étant conçu pour afficher le premier avertissement si l'aéronef se trouve à une première altitude vis-à-vis de l'obstacle (260) et le deuxième avertissement si l'aéronef se trouve à une deuxième altitude vis-à-vis de l' obstacle (260).

8. Système d'affichage visuel (100) selon la revendication 1, la distance en avant prédéfinie de l'enveloppe d'avertissement d'obstacle (250) étant fonction de la vitesse de l'aéronef.

9. Procédé d'affichage d'un obstacle sur un système d'affichage visuel (100) pour un aéronef selon la revendication 1, le procédé comprenant les étapes consistant à :
construire et afficher une enveloppe d'avertissement d'obstacle superposée sur des informations de terrain pour fournir une indication de la trajectoire de vol projetée, l'enveloppe d'avertissement d'obstacle s'étendant en outre jusqu'à une distance en avant prédéfinie et comportant une marge de sécurité latérale de chaque côté de l'aéronef ;
évaluer un obstacle par rapport à l'enveloppe d'avertissement d'obstacle ; et
fournir un avertissement si l'obstacle se situe au sein de l'enveloppe d'avertissement d'obstacle.
